# EUROPÄISCHE PATENTSCHRIFT

(11) **EP 0 594 878 B1**
(45) Veröffentlichungstag und Bekanntmachung des Hinweises auf die Patenterteilung: **26.08.1998**
(21) Anmeldenummer: 92118260.6
(22) Anmeldetag: 26.10.1992
(51) Int. Cl.: H04J 3/06, H04Q 11/04

(54) **Passives optisches Telekommunikationssystem**
Passive optical telecommunication system
Système de télécommunication optique passif

(43) Veröffentlichungstag der Anmeldung: 04.05.1994
(73) Patentinhaber: SIEMENS AKTIENGESELLSCHAFT, 80333 München (DE)
(72) Erfinder: Horbach, Christian, Dr. Ing., W-8000 München 71 (DE); Keller, Hendrik, Dr. Ing., W-8000 München 40 (DE)

(56) Entgegenhaltungen:
- EP-A- 231 590
- EP-A- 383 557
- EP-A- 488 572

## Beschreibung

Neuere Entwicklungen der Telekommunikationstechnik führen zu breitbandigen, diensteintegrierenden Digitalnetzen (B-ISDN), die in der Ebene der Teilnehmeranschlußleitungen Lichtwellenleiter (LWL) aufweisen (EP-A2-0 171 080); solche mit Lichtwellenleitern ausgestattete Kommunikationsnetze sind für Schmalband- und Breitband-Kommunikation geeignet (DE-PS 24 21 002). Von CCITT wird für einen LWL-Anschluß eine Schnittstelle (T_{B}- bzw. V_{B}-Schnittstelle) mit einer Übertragungskapazität von 155,52 Mbit/s vorgevorgeschlagen - eine Bitrate, die zumindest auf absehbare Zeit ein Großteil der Teilnehmer sowohl im privaten als auch im geschäftlichen Bereich bei weitem nicht ausnutzen wird. Die Einführung neuer Telekommunikationssysteme mit LWL-Anschlußleitungen hängt nun aber ganz allgemein außer von Art und Umfang der bereits vorhandenen Fernmeldeinfrastrukturen mit den darin bereitgestellten Telekommunikationsdiensten auch von der Nachfrage nach neuen Breitbandkommunikationsdiensten ab, wobei im Bereich der Privathaushalte das potentiell größte Anschlußvolumen gesehen wird; dieses Anschlußpotential konkretisiert sich indessen zu einer effekten Anschlußnachfrage nur bei entsprechend niedrigen Kosten eines Breitband-Teilnehmeranschlusses.

Zur Aufwandsbegrenzung ist es daher sinnvoll, in der Teilnehmeranschlußebene ein (z.B. aus EP-A1-0 337 619 bekanntes) passives optisches Telekommunikationssystem vorzusehen,
in dem jeweils eine Mehrzahl von Teilnehmerstellen jeweils über eine eigene Lichtwellenleiter-Teilnehmeranschlußleitung mit einem passiven optischen Faserverzweiger verbunden ist, der direkt oder auch über wenigstens einen weiteren passiven optischen Faserverzweiger mit einem gemeinsamen Lichtwellenleiteranschluß der Vermittlungsstelle über einen Lichtwellenleiter-Bus verbunden ist,
in dem die Signalübertragung von der Vermittlungsstelle aus zu den Teilnehmerstellen hin in einem ATM-Zellenstrom vor sich geht, aus dem jede Teilnehmerstelle nur die im Zellen-Header mit einer eben dieser Teilnehmerstelle zugeordneten Kennzeichnung versehenen ATM-Zellen aufnimmt, und
in dem die Signalübertragung von den Teilnehmerstellen aus zur Vermittlungsstelle hin in einem TDMA-Verfahren mit ATM-Zellen vor sich geht, demzufolge eine Teilnehmerstelle jeweils nur nach vorherigem Empfang einer (z.B. mit einer an sie adressierten ATM-Zelle zugleich erteilten) Erlaubnis ihrerseits eine ATM-Zelle nach einer solchen teilnehmerindividuell bemessenen Verzögerungszeit auszusenden vermag, die sich mit der Laufzeit der aufgenommenen ATM-Zelle und der Laufzeit der ausgesendeten ATM-Zelle zu einer für alle Teilnehmerstellen gleichen vorgegebenen Schleifenlaufzeit zwischen dem Aussenden einer von der betreffenden Teilnehmerstelle aufgenommenen ATM-Zelle durch die Vermittlungsstelle und dem Empfang der danach von der betreffenden Teilnehmerstelle ausgesendeten ATM-Zelle durch die Vermittlungsstelle addiert.
Dazu ist es (aus EP-A1-0 460 398) bekannt, daß die Vermittlungsstelle wiederholt nach Maßgabe der Schleifenlaufzeit zwischen dezentraler Einrichtung und Vermittlung eine programmierbare digitale Verzögerungseinrichtung in der dezentralen Einrichtung im Hinblick auf die einheitliche Schlaufenlaufzeit einstellt und die dezentrale Einrichtung jeden Burst mit Hilfe der von der Vermittlungsstelle her einrichtungsindividuell eingestellten Verzögerungseinrichtung synchronisiert aussendet, und zwar in der Weise,
daß die dezentrale Einrichtung den Burst nach lediglich einer - bei einer Lücke von(im Mittel mindestens)zwei Bit zwischen zwei aufeinanderfolgenden ATM-Zellen der in der Vermittlungsstelle von den dezentralen Einrichtungen her empfangenen ATM-Zellenfolge auf ±1 bit genauen - Grobverzögerungszeit von einer oder mehreren ganzen Systemtaktperioden bereits vor dem für eine gewünschte Empfangsphasenlage des Bursts in der Vermittlungsstelle erforderlichen Sendezeitpunkt aussendet und daß erst die Vermittlungsstelle zentral eine jeweils einrichtungsindividuell bemessene Feinverzögerung der bei ihr ankommenden Bursts in die gewünschte Empfangsphasenlage vornimmt.

Damit stellt sich dann die Vermittlungsstelle als ein System dar, in dem ein Digitalsignal seriell und blockweise mit konstantem Takt, jedoch mit von Block zu Block unterschiedlicher Phasenlage empfangen wird und in dem die einzelnen Digitalsignal-Blocks somit zunächst einmal auf den eigenen Systemtakt (Amtstakt) synchronisiert oder, anders gesagt, mit dem Amtstakt übernommen werden müssen; danach können dann alle empfangenen Digitalsignal-Blocks im Amtstakt weiterbehandelt (insbesondere verarbeitet, vermittelt oder übertragen) werden, wobei durch eine nach Ermittlung der Blockrahmenlage durchzuführende Digitalsignal-Parallelisierung eine Signalverarbeitung auch durch entsprechend langsamere integrated circuits (IC's) ermöglicht wird.

Zur Realisierung der drei Funktionen Übernahme mit dem Amtstakt, Blockrahmenerkennung und Serien/Parallel-Wandlung gibt es verschiedene Lösungen:
a) Die empfangenen Digitalsignale werden mit dem Leitungsbittakt in einen FIFO-(first-in-first-out-)Speicher eingeschrieben und mit dem Amtstakt ausgelesen; danach wird eine im empfangenen Digitalsignal enthaltene Blockrahmenkennung ermittelt und die Parallelwandlung in Kenntnis des Rahmenbeginns durchgeführt.
b) Zur Übernahme mit dem Amtstakt wird das empfangene Digitalsignal mit Hilfe einer Verzögerungsleitung oder mit einem Abtasttakt, der gleich einem Vielfachen des Amtstaktes ist, mit erhöhter zeitlicher Auflösung abgetastet; Blockrahmenerkennung und Parallelwandlung werden wiederum getrennt nach der Übernahme mit dem Amtstakt durchgeführt.
c) Vor der Übernahme mit dem Amtstakt werden Blockrahmenerkennung und Parallelwandlung durchgeführt mit der Folge, daß der Leitungsbittakt durch die Bitspeicherplatz-Anzahl des Serien/Parallel-Wandlers geteilt wird; die in Paralleldarstellung vorliegenden Bytes können dann direkt mit dem (ungeteilten) Amtstakt abgetastet werden.

Die Erfindung zeigt nun einen eg zu einer besonders aufwandsarmen Realisierung von Taktanpassung, Blockrahmenerkennung und Parallelisierung.

Die Erfindung betrifft eine Schaltungsanordnung zur Übernahme von n-stelligen, jeweils seriell in einem Leitungsbittakt empfangenen und nach Maßgabe eines Amtstaktes jeweils parallel weiterzugebenden, im folgenden generell als Bytes bezeichneten n-bit-Worten mit dem Amtsbittakt, mit einem jeweils mit einem seriellen n-bit-Wort (Byte) im Leitungsbittakt beschriebenen und jeweils im Amtsbittakt auszulesenden FIFO-Speicher, insbesondere zur Übernahme von von dezentralen Einrichtungen her empfangenen ATM-Zellen in der Vermittlungsstelle eines passiven optischen Telekommunikationsnetzes; diese Schaltungsanordnung ist erfindungsgemäß dadurch gekennzeichnet, daß die eingangsseitig zyklisch im Leitungsbittakt angesteuerten Bitspeicherplätze des ersten n-bit-Registers zweier n-bit-Register ausgangsseitig zu den Eingängen der Bitspeicherplätze des eingangsseitig zyklisch im Amtsbittakt angesteuerten zweiten n-bit-Registers führen, und daß ein Bytegrenzendetektor anhand eines im empfangenen Bitstrom enthaltenen Kennungs-Bitmusters den Beginn eines nachfolgenden Bytes ermittelt und daraufhin den Einschreibzyklus des ersten n-bit-Registers auf die zeitliche Lage dieses Bytes neu synchronisiert und den Einschreibzyklus des zweiten n-bit-Registers etwa um eine halbe Bytelänge dagegen versetzt, so daß jeweils gerade die Bits eines jeden empfangenen Bytes seriell im Leitungsbittakt in das erste n-bit-Register eingeschrieben und von dort im Amtsbittakt in das zweite n-bit-Register übernommen werden, um schließlich von dort parallel weitergegeben zu werden. Dabei kann in weiterer Ausgestaltung der Erfindung die Ansteuerung des ersten n-bit-Registers von einem mit dem Leitungsbittakt weitergeschaltetenen und vom Bytegrenzendetektor her rückgesetzten (modulo n)-Zähler jeweils bei dessen Rücksetzung ebenfalls rückgesetzt werden und die Ansteuerung des zweiten n-bit-Registers von einem mit dem Amtsbittakt weitergeschalteten und vom Bytegrenzendetektor über ein ausgangsseitig amtstaktsynchrones Verzögerungsglied rückgesetzten (modulo n)-Zähler her bei dessen Rücksetzung rückgesetzt werden.

Die Erfindung bringt gegenüber den zuvor genannten Lösungen den Vorteil einer aufwandsarmen Kombination von Taktanpassung und Parallelisierung des Digitalsignals mit sich.

Weitere Besonderheiten der Erfindung werden aus der nachfolgenden näheren Erläuterung eines Ausführungsbeispiels anhand der Zeichnungen ersichtlich. Dabei zeigen
- FIG 1: ein Ausführungsbeispiel einer Schaltungsanordnung gemäß der Erfindung und
- FIG 2: ein passives optisches Telekommunikationssystem mit einem Sternnetz von LWL-Anschlußleitungen.

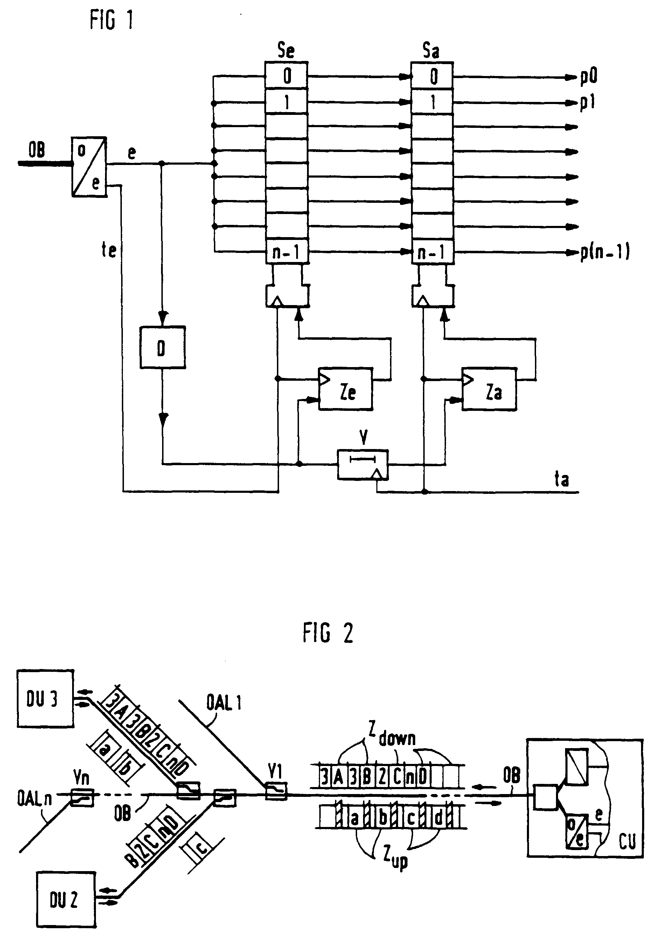

In der Zeichnung FIG 1 ist schematisch in einem zum Verständnis der Erfindung erforderlichem Umfang eine Schaltungsanordnung zur Übernahme von von dezentralen Einrichtungen her empfangenen ATM-Zellen in einer zentralen Einrichtung (Vermittlungsstelle) eines passiven optischen Telekommunikationssystems dargestellt, wie es schematisch in FIG 2 skizziert ist. Gemäß FIG 2 handelt es sich um ein bidirektionales LWL-Telekommunikationssystem mit einem passiven (vorzugsweise Monomode-)LWL- Busnetz, das sich zwischen einer zentralen Telekommunikationseinrichtung CU, beispielsweise einer Vermittlungsstelle, und einer Mehrzahl von dezentralen Telekommunikationseinrichtungen ..., DU2, DU3,... , z.B. Teilnehmerstellen oder sog. Distant Units, erstreckt. In diesem LWL-Telekommunikationssystem sind die dezentralen Telekommunikationseinrichtungen DU über einen ein- oder mehrfaserigen LWL-Bus OB mit einem gemeinsamen LWL-Multiplexanschluß der zentralen Telekommunikationseinrichtung CU verbunden; die LWL-Anschlußleitungen OAL1, ..., OALn mögen dabei über passive, d.h. nicht wellenlängenselektive, optische Faserverzweiger V1,...Vn mit dem zugehörigen LWL-Bus OB verbunden sein, und zwar entweder direkt, wie in FIG 2 explizit dargestellt, oder auch über weitere derartige Verzweiger. Als optische Verzweiger können dabei beispielsweise Durchgangsmischer oder optische Richtkoppler Anwendung finden. Es ist auch möglich, für eine Mehrzahl von LWL-Anschlußleitungen einen gemeinsamen optischen Verzweiger vorzusehen, wie dies an sich (z.B. aus der EP-A2-0 171 080) bekannt ist und daher hier nicht näher dargestellt zu werden braucht.

In dem in der Zeichnung skizzierten einfaserigen Telekommunikationssystem kann zur Richtungstrennung ein Wellenlängengetrenntlagebetrieb (bidirektionales Wellenlängenmultiplex) vorgesehen sein, indem zur Signalübertragung in Abwärtsrichtung von der zentralen Telekommunikationseinrichtung CU zu den dezentralen Telekommunikationseinrichtungen DU hin Licht einer beispielsweise im 1550-nm-Band liegenden ersten Wellenlänge und zur Signalübertragung in Aufwärtsrichtung von den dezentralen Telekommunikationseinrichtungen ...,DU2, DU3,... zur zentralen Telekommunikationseinrichtung CU hin Licht einer etwas kleineren, beispielsweise im 1300-nm-Band liegenden zweiten Wellenlänge verwendet wird. Hierzu können in der zentralen Telekommunikationseinrichtung ein entsprechender, zweckmäßigerweise durch eine Laserdiode gebildeter elektrooptischer Wandler und ein entsprechender, zweckmäßigerweise durch eine Avalanche- oder PIN-Photodiode gebildeter optoelektrischer Wandler vorgesehen sein, die mit dem zugehörigen LWL-Bus OB über ein wellenlängenselektives optisches Filter, beispielsweise einen (z.B. aus US-A-4 790 616) bekannten, mit einem Interferenz-Strahlteiler versehenen optischen Weichenbaustein, verbunden sind. In entsprechender Weise mögen auch die dezentralen Telekommunikationseinrichtungen ...,DU2, DU3,... mit elektrooptischen und optoelektrischen Wandlern versehen sein. Die Erfindung kann natürlich auch Anwendung finden, wenn abweichend von der zeichnerischen Darstellung für den Abwärtsrichtung- Verkehr und für den Aufwärtsrichtung-Verkehr jeweils eine eigene Faser vorgesehen ist.

In dem skizzierten Telekommunikationssystem kann, wie dies auch (z.B. aus EP-A1-0 425 732) bekannt ist, die Signalübertragung von der zentralen Einrichtung CU aus abwärts zu den dezentralen Einrichtungen ...DU2, DU3,... hin in einem ATM-Zellenstrom Z_{down} vor sich gehen; in der umgekehrten Übertragungsrichtung geht die Signalübertragung von den dezentralen Einrichtungen DU aufwärts zur zentralen Einrichtung CU hin in einem TDMA-Verfahren mit ATM-Zellen Zᵤₚ vor sich. Jeder z.B. 53 Bit-Oktetts umfassenden, aus einem (5-Oktett-)Steuerinformationsfeld (Header) und einem (48 Oktetts umfassenden) Nutzinformationsfeld bestehenden ATM-Zelle möge ein in beiden Richtungen gleichlanger Overhead hinzugefügt sein, in Abwärtsrichtung eine reine Präambel, in Aufwärtsrichtung eine Übertragungslücke zu der auf dem LWL-Bus OB vorangehenden ATM-Zelle und eine entsprechend kürzere Präambel.

In den ATM-Zellenstrom Z_{down} können, wenn gerade keine Nutzinformation zu übertragen ist, Synchronisierzellen mit vorgegebenem Bitmuster zur Synchronisation der dezentralen Einrichtungen auf den jeweiligen Zellenanfang eingeblendet sein (sog. pure ATM); es ist aber auch möglich, daß der ATM-Zellenstrom Z_{down} seinerseits in eine (beispielsweise STM-l-)Zeitrahmenstruktur mit in bestimmten festen Abständen auftretenden Synchronisiersignalen (Overhead) eingebettet ist (sog. frame structured ATM).
Aus dem ATM-Zellenstrom Z_{down} entnimmt jede dezentrale Einrichtung DU nur diejenigen ATM-Zellen, die in ihrem Header, vorzugsweise in dessen Virtual Path Identifier, mit (einer) eben dieser dezentralen Einrichtung DU bzw. dem (den) an ihr angeschlossenen Teilnehmer(n) zugeordneten Kennzeichnung(en) adressiert sind.
In der umgekehrten Übertragungsrichtung vermag eine dezentrale Einrichtung DU jeweils nur nach vorheriger Aufnahme einer entsprechenden, z.B. mit einer an sie adressierten ATM-Zelle des ATM-Zellenstroms Z_{down} erteilten Erlaubnis nun ihrerseits eine ATM-Zelle abzugeben, und zwar nach einer DU-individuell bemessenen Verzögerungszeit. Diese Verzögerungszeit ist dabei so bemessen, daß sie sich mit der Laufzeit t_{down} der ATM-Zellen von der zentralen Einrichtung CU bis zu der betreffenden dezentralen Einrichtung DU und der Laufzeit tᵤₚ von der betreffenden dezentralen Einrichtung DU zur zentralen Einrichtung CU zu einer für alle dezentralen Einrichtungen ..., DU2, DU3, ... gleichen vorgegebenen Schleifenlaufzeit zwischen dem Aussenden einer von der betreffenden dezentralen Einrichtung DU aufzunehmenden ATM-Zelle durch die zentrale Einrichtung CU und dem Empfang der danach von der betreffenden dezentralen Einrichtung DU ausgesendeten ATM-Zelle durch die zentrale Einrichtung CU addiert.

Dabei kommt es für eine sichere Aufnahme der ATM-Zellen durch die zentrale Telekommunikationseinrichtung CU darauf an, daß die den Aufwärts-Burststrom Zᵤₚ bildenden ATM-Zellen nicht nur überhaupt in einem jeweils reservierten Zeitfach übertragen werden, sondern daß sie innerhalb dieses Zeitfachs auch mit einer gewünschten optimalen Empfangsphasenlage, nämlich mit dem Amtstakt der zentralen Einrichtung CU, von dieser übernommen werden können.
Dies kann dadurch erreicht werden, daß die dezentralen Einrichtungen DU ATM-Zellen jeweils nach lediglich einer - bei einer Lücke von (im Mittel mindestens) zwei Bit zwischen zwei aufeinanderfolgenden ATM-Zellen der in der zentralen Einrichtung von den dezentralen Einrichtungen her empfangenen ATM-Zellenfolge auf ±1 bit genauen - Grobverzögerungszeit von einer oder mehreren ganzen Systemtaktperioden bereits vor dem für eine gewünschte Empfangsphasenlage der ATM-Zellen in der zentralen Einrichtung CU erforderlichen Sendezeitpunkt aussenden und daß erst die zentrale Einrichtung CU zentral eine jeweils DU-individuell bemessene Feinverzögerung der bei ihr ankommenden ATM-Zellen vornimmt.

Hierzu kann die zentrale Einrichtung CU eingangsseitig mit einer ihrem optoelektrischen Wandler o/e nachgeschalteten Übernahmeschaltung zur Übernahme von n-stelligen, jeweils seriell in einem Leitungsbittakt empfangenen und nach Maßgabe eines Amtstaktes jeweils parallel weiterzugebenden Bytes mit dem Amtsbittakt versehen sein, wie sie schematisch in FIG 1 dargestellt ist.

Gemäß FIG 1 weist diese Schaltungsanordnung zwei n-bit-Register Se, Sa mit jeweils n Bitspeicherplätzen 0,1,...n-1 auf. Die n Bitspeicherplätze des ersten n-bit-Registers Se sind eingangsseitig mit einer das im optoelektrischen Wandler o/e vom Optischen in Elektrische umgesetzte Empfangssignal (ATM-Zellenfolge Zᵤₚ in FIG 1) führenden Eingangssignalleitung e verbunden und werden von einer den vom elektrooptischen Wandler o/e gewonnenen Eingangssignal-Bittakt (Leitungsbittakt) führenden Leitungsbittaktleitung te her zyklisch entriegelt, so daß jeweils n auf der Eingangssignalleitung e seriell auftretende Bits auf die n Bitspeicherplätze 0,1,...n-1 des ersten n-bit-Registers Se gelangen.

Ausgangsseitig führen die n Bitspeicherplätze 0,1,...n-1 des ersten n-bit-Registers Se zu den Eingängen der n Bitspeicherplätze 0,1,...n-1 des zweiten n-bit-Registers Sa, das von einer den Amtsbittakt der zentralen Einrichtung CU in Fig. 2 führenden Amtsbittaktleitung ta her zyklisch angesteuert wird, so daß jeweils die gerade im ersten n-bit-Register Se gespeicherten n-Bits sukzessive auf die n Bitspeicherplätze 0,1,...n-1 des zweiten n-Registers Sa gelangen.

Ein eingangsseitig ebenfalls an die Eingangssignalleitung e angeschlossener Bytegrenzendetektor D kann durch einen Blockrahmenlagendetektor gebildet sein, der ein im empfangenen Bitstrom insbesondere in Form einer sog. Cell Delineation Identification (CDI) enthaltenes Kennungs-Bitmuster ermittelt und daran den Beginn eines nachfolgenden, hier generell als Byte bezeichneten n-bit-Wortes erkennt, auf dessen zeitliche Lage das erste n-bit-Register Se synchronisiert wird. Dies geschieht dadurch, daß synchron mit der zyklischen Ansteuerung des ersten n-bit-Registers Se mit dem Leitungsbittakt (te) des LWL-Bus' OB auf einen (modulo n)-Zähler Ze weitergeschaltet wird, der vom Bytegrenzendetektor D her bei dessen Ansprechen rückgesetzt wird und damit zugleich - oder auch einen Zählerdurchlauf später - auch die Ansteuerung des n-bit-Registers Se auf den Beginn eines neuen Ansteuerzyklus' zurücksetzt. Dies hat zur Folge, daß das genannte nachfolgende, auf der Eingangssignalleitung e seriell auftretende n-bit-Wort - Byte - gerade als ein ganzes Byte, d.h. geschlossen (ungestückelt), in das erste n-bit-Register Se gelangt. Endet das (CDI-)Kennungsbitmuster nicht an einer Bytegrenze, sondern im m-ten Bit eines Bytes, so ist der (modulo n)-Zähler Ze nicht auf den nullten, sondern auf den (m+1)-ten Zählschritt rückzusetzen; entsprechendes gilt bei gleichzeitiger Rücksetzung auch für das n-bit-Register Se.

Das vom Bytegrenzendetektor D abgegebene Rücksetzsignal wird außerdem über ein zumindest ausgangsseitig amtstaktsynchrones digitales Verzögerungsglied V, das in Form eines amtsbittaktgesteuerten (n/2)-bit-Schieberegisters realisiert sein kann, etwa um eine halbe Bytelänge verzögert dem Rücksetzeingang eines zweiten (modulo n)-Zählers Za zugeführt. Dieser zweite (modulo n)-Zähler Za wird synchron mit der zyklischen Ansteuerung des zweiten n-bit-Registers Sa mit dem Amtsbittakt (ta) der zentralen Einrichtung (CU in FIG 2) weitergeschaltet. Zugleich mit seiner Rücksetzung - oder auch einen Zählerdurchlauf später - setzt der zweite (modulo n)-Zähler Za auch die Ansteuerung des zweiten n-bit-Registers Sa auf den Beginn eines neuen Ansteuerzyklus' zurück. Dies hat zur Folge, daß im Verlauf dieses neuen Ansteuerzyklus' das gerade als ein ganzes Byte in das erste n-bit-Register Se gelangte Byte Bit nach Bit ebenfalls als ein ganzes Byte nunmehr im Amtsbittakt (ta) in das zweite n-bit-Register Sa übernommen wird, wonach es an dessen Parallelausgängen p0, p1 .. .., p(n-1) zur Weitergabe in Paralleldarstellung bereitsteht.
Endet das (CDI-)Kennungs-Bitmuster nicht an einer Bytegrenze, sondern im m-ten Bit eines Bytes, so ist auch der (modulo n)-Zähler Za nicht auf den nullten, sondern auf den (m+1)-ten Zählschritt rückzusetzen; entsprechendes gilt bei gleichzeitiger Rücksetzung auch für das n-bit-Register Sa.

Die Zählerstände der beiden (modulo n)-Zähler Ze und Za haben auf Grund der angegebenen Rücksetzverzögerung immer einen Abstand von etwa n/2, so daß ein gleichzeitiger Schreib- und Lesezugriff auf ein und denselben Bitspeicherplatz des n-bit-Registers Se vermieden ist.

## Patentansprüche

1. Schaltungsanordnung zur Übernahme von n-stelligen, jeweils seriell in einem Leitungsbittakt (te) empfangenen und nach Maßgabe eines Amtstaktes jeweils parallel weiterzugebenden n-bit-Worts mit dem Amtsbittakt (ta), mit einem jeweils mit einem seriellen n-bit-Wort im Leitungsbittakt (te) beschriebenen und jeweils im Amtsbittakt (ta) auszulesenden FIFO-Speicher, insbesondere zur Übernahme von von dezentralen Einrichtungen her empfangenen ATM-Zellen in der Vermittlungsstelle eines passiven optischen Telekommunikationsnetzes,
**dadurch gekennzeichnet,**
daß die eingangsseitig zyklisch im Leitungsbittakt (te) angesteuerten Bitspeicherplätze (0,1,...n-1) des ersten n-bit-Registers (Se) zweier n-bit-Register (Se, Sa) ausgangsseitig zu den Eingängen der Bitspeicherplätze (0,1,.. ..n-1) des eingangsseitig zyklisch im Amtsbittakt (ta) angesteuerten zweiten n-bit-Registers (Sa) führen, und
daß ein Bytegrenzendetektor (D) anhand eines im empfangenen Bitstrom enthaltenen Kennungs-Bitmusters den Beginn eines nachfolgenden n-bit-Wortes - Bytes - ermittelt und daraufhin den Einschreibzyklus des ersten n-bit-Registers (Se) auf die zeitliche Lage dieses Bytes neu synchronisiert und den Einschreibzyklus des zweiten n-bit-Registers (Sa) etwa um eine halbe Bytelänge dagegen versetzt, so daß jeweils gerade die Bits eines jeden empfangenen n-bit-Wortes - Bytes - seriell im Leitungsbittakt (te) in das erste n-bit-Register (Se) eingeschrieben und von dort im Amtsbittakt in das zweite n-bit-Register (Sa) übernommen werden, um schließlich von dort parallel weitergegeben zu werden.

2. Schaltungsanordnung nach Anspruch 1,
**dadurch gekennzeichnet,**
daß die Ansteuerung des ersten n-bit-Registers (Se) von einem mit dem Leitungsbittakt (te) weitergeschaltetenen und vom Bytegrenzendetektor (D) her rückgesetzten (modulo n)-Zähler (Ze) jeweils bei dessen Rücksetzung ebenfalls rückgesetzt wird und
daß die Ansteuerung des zweiten n-bit-Registers (Sa) von einem mit dem Amtsbittakt (ta) weitergeschalteten und vom Bytegrenzendetektor (D) her über ein ausgangsseitig amtstaktsynchrones Verzögerungsglied (V) rückgesetzten (modulo n)-Zähler (Za) jeweils bei dessen Rücksetzung ebenfalls rückgesetzt wird.

3. Schaltungsanordnung nach Anspruch 1 oder 2,
**dadurch gekennzeichnet,**
daß der Bytegrenzendetektor (D) durch einen Blockrahmenlagendetektor gebildet ist, der anhand einer im empfangenen Bitstrom enthaltenen Blockrahmenkennung den Beginn eines nachfolgenden n-bit-Worts - Bytes - ermittelt.

## Claims

1. Circuit arrangement for the acceptance at the exchange bit rate (ta) of n-place, n-bit words which are each received serially at a line bit rate (te) and, as a function of an exchange clock pulse, are each to be forwarded in parallel, having an FIFO memory which is in each case written with a serial n-bit word at the line bit rate (te) and is in each case to be read out at the exchange bit rate (ta), in particular for the acceptance of ATM cells received (from decentralized units) in the switching centre of a passive optical telecommunication network, characterized
in that the bit memory locations (0,1,...n-1) that belong to the first n-bit register (Se) of two n-bit registers (Se, Sa) and are activated cyclically on the input side at the line bit rate (te) lead, on the output side, to the inputs of the bit memory locations (0,1,...n-1) that belong to the second n-bit register (Sa) and are activated cyclically on the input side at the exchange bit rate (ta), and
in that a byte boundary detector (D) ascertains the beginning of a following n-bit word - byte - using an identifier bit pattern contained in the received bit stream and then re-synchronizes the writing cycle of the first n-bit register (Se) with the time position of this byte and, on the other hand, offsets the writing cycle of the second n-bit register (Sa), for example by one half byte length, so that in each case it is precisely the bits of each received n-bit word - byte - that are written serially into the first n-bit register (Se) at the line bit rate (te) and are accepted from there into the second n-bit register (Sa) at the exchange bit rate, in order finally to be forwarded from there in parallel.

2. Circuit arrangement according to Claim 1, characterized
in that when a (modulus n) counter (Ze), which is incremented at the line bit rate (te) and is reset by the byte boundary detector (D), is reset, the activation of the first n-bit register (Se) is likewise reset in each case and
in that, when a (modulus n) counter (Za), which is incremented at the exchange bit rate (ta) and is reset by the byte boundary detector (D) via a delay element (V) whose output is synchronized with the exchange clock pulse, is reset the activation of the second n-bit register (Sa) is likewise reset in each case.

3. Circuit arrangement according to Claim 1 or 2, characterized in that the byte boundary detector (D) is formed by a block frame position detector which ascertains the beginning of a following n-bit word - byte - using a block frame identifier contained in the received bit stream.

## Revendications

1. Circuit pour recevoir selon une cadence binaire de central (ta) des mots de n bits, c'est-à-dire à n positions, reçus chacun en série selon une cadence binaire de ligne (te) et à retransmettre en parallèle selon la cadence de central, comportant une mémoire FIFO, écrite à chaque fois avec un mot de n bits série selon la cadence binaire de ligne (te) et à lire à chaque fois selon la cadence binaire de central (ta), notamment pour recevoir des cellules ATM reçues de dispositifs locaux dans le centre de commutation d'un réseau de télécommunication optique passif,
caractérisé par le fait que
les emplacements binaires de mémoire (0, 1,..., n-1), contrôlés en entrée de façon cyclique selon la cadence binaire de ligne (te), du premier registre de n bits (Se) parmi deux registres de n bits (Se, Sa) conduisent en sortie aux entrées des emplacements binaires de mémoire (0, 1,..., n-1) du deuxième registre de n bits (Sa), contrôlé en entrée de façon cyclique selon la cadence binaire de central (ta), et qu'un détecteur de limite d'octet (D) détermine à l'aide d'une configuration binaire d'identification contenue dans le flux de bits reçu le début d'un mot de n bits - octet - suivant, resynchronise alors le cycle d'écriture du premier registre de n bits (Se) sur la position temporelle de cet octet et décale par contre le cycle d'écriture du deuxième registre de n bits (Sa) environ d'une demi-longueur d'octet de telle sorte que, à chaque fois, les bits d'un mot de n bits - octet - reçu sont écrits en série avec la cadence binaire de ligne (te) dans le premier registre de n bits (Se) et sont transférés ensuite avec la cadence binaire de central dans le deuxième registre de n bits (Sa) pour être finalement retransmis à partir de là en parallèle.

2. Circuit selon la revendication 1,
caractérisé par le fait que
le contrôle du premier registre de n bits (Se) est remis à l'état initial par un compteur modulo n (Ze), soumis à la cadence binaire de ligne (te) et remis à l'état initial par le détecteur de limite d'octet (D), lors de la remise à l'état initial de ce compteur, et que
le contrôle du deuxième registre de n bits (Sa) est remis à l'état initial par un compteur modulo n (Za), soumis à la cadence binaire de central (ta) et remis également à l'état initial par le détecteur de limite d'octet (D) par l'intermédiaire d'un temporisateur (V) synchrone en sortie à la cadence de central, lors de la remise à l'état initial de ce compteur.

3. Circuit selon la revendication 1 ou 2,
caractérisé par le fait que
le détecteur de limite d'octet (D) est formé par un détecteur de position de trame de bloc qui détermine à l'aide d'un identificateur de trame de bloc contenu dans le flux de bits reçu le début d'un mot de n bits - octet - suivant.
